# EUROPÄISCHE PATENTSCHRIFT

(11) **EP 3 948 196 B1**
(45) Veröffentlichungstag und Bekanntmachung des Hinweises auf die Patenterteilung: **07.06.2023**
(21) Anmeldenummer: 20718603.2
(22) Anmeldetag: 03.04.2020
(51) Int. Cl.: B62D 1/06, G01L 1/20, G01L 5/22, B62D 1/04, G01L 5/161

(54) **FLÄCHENHAFTE KRAFT-SENSOREINHEITEN FÜR SENSORSYSTEME**
EXTENSIVE FORCE SENSOR UNITS FOR SENSOR SYSTEMS
UNITÉS DE CAPTEURS DE FORCE DE SURFACE POUR SYSTÈMES DE CAPTEURS

(30) Priorität: 05.04.2019 DE 102019002819
(43) Veröffentlichungstag der Anmeldung: 09.02.2022
(73) Patentinhaber: Curvesys GmbH, 85402 Kranzberg (DE)
(72) Erfinder: GÜZELOCAK, Denis, 84453 Mühldorf (DE)
(74) Vertreter: Meissner Bolte Partnerschaft mbB
(86) Internationale Anmeldenummer: PCT/EP2020/059661
(87) Internationale Veröffentlichungsnummer: WO 2020/201548

(56) Entgegenhaltungen:
- DE-B3-102014 007 163
- US-A1- 2006 150 752
- US-B1- 6 360 612

## Beschreibung

Die vorliegende Erfindung bezieht sich auf flächenhafte Kraft-Sensoreinheiten für Sensorsysteme, mit ersten und zweiten isolierenden Trägerfolien, die übereinander angeordnet sind und auf ihren einander, zugewandten Flächen erste und zweite Leiterbahnmuster tragen, zwischen denen elastisch verformbare Abstandselemente angeordnet sind. Die Trägerfolien sind durch die Abstandselemente elastisch voneinander fort vorgespannt. Durch Ausüben einer Kraft auf zumindest eine der Folien kann ein Kontakt zwischen den ersten und den zweiten Leiterbahnenmustern hergestellt werden. Zumindest eines der ersten und zweiten Leiterbahnmuster ist durch die Abstandselemente in eine Vielzahl von Kontaktbereichen unterteilt, in denen bei einer Kraftausübung auf zumindest eine der Folien ein Kontakt zwischen den Leiterbahnmustern der ersten und der zweiten Folie erfolgt, wobei die Leiterbahnmuster auf den Folien zumindest teilweise durch widerstandsbehaftete Beschichtungen gebildet sind, die einen vorgegebenen elektrischen Flächenwiderstand aufweisen. Dadurch ist die Position einer Betätigung und Kontaktgabe zwischen den Leiterbahnen der ersten und zweiten Trägerfolien aus dem sich daraus ergebenden Widerstand zwischen den ersten und zweiten Leiterbahnen zu ermitteln.

Die ersten und zweiten Leiterbahnmuster weisen entsprechend Anschlüsse zur Verbindung mit einer Auswerteschaltung auf, die ein Ausgangssignal in Abhängigkeit von der Position und der Anzahl der durch Kraftausübung und Zusammendrückung der Abstandselemente resultierenden Widerstandswerte abgibt.

Druck- oder kraftempfindliche Sensorsysteme werden in vielen Überwachungssystemen verwendet. Beispielwelse werden sie in Kraftfahrzeugen und dergleichen verwendet, um festzustellen, ob ein Fahrer ein Lenkrad festhält oder auf dieses eine Handkraft ausübt oder aufgrund einer Übermüdung oder, eines Gesundheitsproblems das Lenkrad oder ein anderes Steuerelement losläßt, wobei als Beispiel auf die DE 102010035940 B4 und die DE 102014007163 verwiesen wird. Die gleichen druckempfindlichen Sensorsysteme sind weiterhin allgemein für Anwendungen geeignet, bei denen eine Druck- oder Krafteinwirkung erfasst oder gemessen werden soll, wie sie bei einem Unfall, durch das Besetzen eines Fahrzeugsitzes oder durch eine Kraft hervorgerufen wird, die eine Aktion auslösen soll, wie zum Beispiel von Steuerelementen oder Zubehör von Kraftfahrzeugen. Andere Beispiele sind Regalsysteme, bei denen der Füllzustand einzelner Fächer laufend überwacht werden soll. Dies sind nur wenige spezielle Anwendungsmöglichkeiten, die in großer Anzahl für flächenhafte Kraft-Sensoreinheiten gegeben sind.

Da bei vielen Anwendungen derartige Sensorsysteme unter einer äußeren Abdeckung angeordnet werden, sollten die Sensoreinheiten nur eine geringe Dicke senkrecht zu ihrer Hauptfläche aufweisen, damit das Aussehen des Gegenstandes, auf dem sie angebracht sind, nicht beeinflusst wird. Da die Abdeckungen teilweise unter relativ hoher mechanischer Spannung auf den eigentlichen Gegenstand, dessen Betätigung festgestellt werden soll, aufgezogen werden müssen, ergibt sich bei den geringen Abmessungen der Abstandselemente, bei starken Temperaturänderungen oder auch bei übermäßigen Druck- oder Krafteinwirkungen die Gefahr von dauernd bleibenden lokalen Zusammendrückungen der Folien und damit eine Fehlbetätigung. Dies ist beispielsweise bei den Lenkradkränzen von Lenkrädern in Kraftfahrzeugen der Fall, die mit einer Lederumhüllung versehen sind, unter der das Sensorsystem angeordnet ist, tritt jedoch bei anderen Anwendungsfällen auf, wie beispielsweise Sitz-Sensoren, die in Kraftfahrzeugsitzen verwendet werden, um eine Belegung oder andere Belastung des Fahrzeug-Sitzes festzustellen. Durch die Druckausübung durch den Sitz-Überzug kann bei bekannten druckempfindlichen Sensoren eine zumindest teilweise Fehlbetätigung einer Anzahl der einzelnen Kontaktelemente hervorgerufen werden. Gleiches gilt, wenn die Sensoreinheiten im Inneren von Bekleidungsstücken oder Helmen zur Feststellung eines Aufpralls angeordnet werden sollen.

Diese Probleme verstärken sich insbesondere dann, wenn die Unterlage, auf die die Sensoreinheiten aufgebracht werden, nicht eben ist, sondern zwei- oder dreidimensional verformt sind, wie dies beispielsweise bei Lenkradkränzen von Kraftfahrzeugen, Ganghebeln, Armaturenbrettern, Stoßfängern und anderen Gegenständen der Fall ist, auf denen oder in denen die Kraft-Sensoreinheiten angebracht werden sollen.

Derartige Probleme können zwar durch eine entsprechende Ausgestaltung der Auswerteschaltungen, denen die Ausgangssignale der Sensoreinheiten zugeführt werden, gemildert werden, sind jedoch in jedem Fall störend.

Der Erfindung liegt die Aufgabe zugrunde, eine flächenhafte Kraft-Sensoreinheit für Sensorsysteme zu schaffen, bei denen dieses Problem von Fehlbetätigungen durch äußere Einflüsse beseitigt oder zumindest wesentlich verringert ist.

Diese Aufgabe wird durch die im Patentanspruch 1 angegebene Erfindung gelöst.

Bei der erfindungsgemäßen Ausgestaltung der Sensoreinheiten ist vorgesehen, dass auf zumindest einer der einander zugewandten Leiterbahnen eine Anzahl von zweiten Abstandselementen angeordnet sind, die eine geringere mechanische Widerstandskraft gegen eine Zusammendrückung als die ersten Abstandselemente aufweisen und mit Abstand voneinander angeordnet sind und zunächst durch die ersten Abstandselemente vor einer ungewollten Zusammendrückung geschützt sind.

Im Ergebnis sind durch diese Ausgestaltung der ersten Abstandselemente die Leiterbahnen jeweils zwischen zwei ersten Abstandselementen aufgespannt, selbst wenn die Sensoreinheit als solche auf einer gekrümmten Oberfläche, beispielsweise eines Steuerelements oder dergleichen aufgebracht ist.

Vorteilhafte Ausgestaltungen und Weiterbildungen der Erfindung ergeben sich aus den Unteransprüchen.

Die Erfindung wird nachfolgend anhand von in der Zeichnung dargestellten Ausführungsformen noch näher erläutert.

In der Zeichnung zeigen:
Figur 1 eine erste Ausführungsform eines Segments einer flächenhaften Sensoreinheit für Kraft- und/oder Drucksensorsysteme;
Figur 2 eine Draufsicht auf eine erste Ausführungsform der unteren Trägerfolie der Ausführungsform nach Figur 1;
Figur 3 eine Draufsicht auf eine zweite Ausführungsform der unteren Trägerfolie der Ausführungsform nach Figur 1;
Figur 4 eine Unteransicht einer alternativen Ausführungsform der oberen Trägerfolie der Ausführungsform nach Figur 1;
Figur 5 eine schematische Darstellung eines Segments, das durch die Form einer Unterlage und der außen angebrachten Hülle oder Abdeckung dreidimensional verformt ist;
Figur 6 eine schematische Seitenansicht eines zwischen einer Unterlage und einer oberen Hülle oder Abdeckung angeordneten Segments der Sensoreinheit;
Figur 7 eine Anwendung von Ausführungsformen der Sensoreinheiten auf einem Lenkräd eines Kraftfahrzeugs

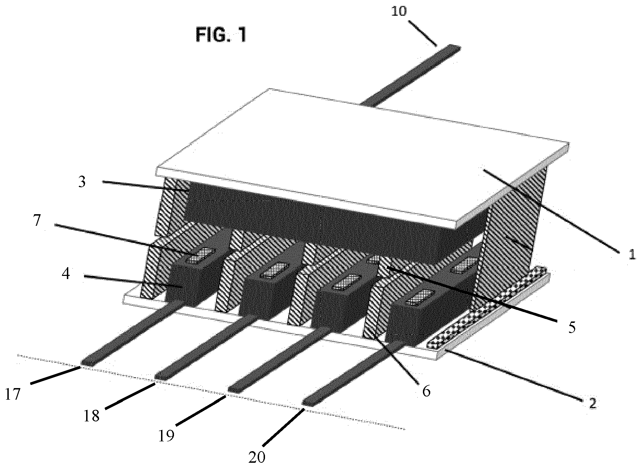

In Figur 1 ist eine erste Ausführungsform lediglich eines Segments einer flächenhaften Sensoreinheit für Kraft- und/oder Drucksensorsysteme gezeigt, die Tell einer sowohl in Längs- als auch in Querrichtung verlängerten Gesamtanordnung von Segmenten sein kann, von der in Figur 1 lediglich ein Segment dargestellt ist.

Die Darstellung in Figur 1 und den nachfolgenden Figuren ist nicht maßstäblich, sondern dient lediglich zum besseren Verständnis der vorliegenden Erfindung. In der Praxis weisen sowohl die Trägerfolien, die Leiterbahnen und die Abstandelemente sehr geringe Dicken auf, und ebenso sind die übrigen Abmessungen sehr stark vergrößert dargestellt ist. Bei praktisch verwendeten Ausführungsformen können die Trägerfolien eine Dicke von etwa 80 bis 160 µm aufweisen, während die Leiterbahnen eine Dicke von 40 bis 60 µm aufweisen können. Die nachfolgend erläuterten ersten Abstandselemente können einen Abstand zwischen den Leiterbahnen von 80 bis 120 µm im unbelasteten Zustand ergeben, während die zweiten Abstandselemente eine Höhe von etwa 20 bis 40 µm aufweisen können.

Die in Figur 1 dargestellte Ausführungsform des Segments umfasst eine obere Trägerfolie 1 und eine untere Trägerfolie 2, wobei auf der auf die untere Trägerfolie 2 gerichteten Oberfläche der oberen Trägerfolie 1 eine durchgehende Leiterbahn 3 mit einer Verbindungsleitung 10 angeordnet ist. Die Leiterbahn 3 ist vorzugsweise aus einem Material mit einem vorgegebenen Flächenwiderstand durch Aufdrucken auf die obere Trägerfolie 2 hergestellt.

Auf der unteren Trägerfolie 2 sind streifenförmige Leiterbahnen 4 mit seitlichem Abstand voneinander angeordnet, wobei in Figur 1 lediglich vier derartige langgestreckte Leiterbahnen 4 gezeigt sind, die mit Verbindungsleitungen 17, 18, 19, 20 versehen sind. Auch die Leiterbahnen 4 sind vorzugsweise aus einem Material mit einem vorgegebenen Flächenwiderstand durch Aufdrucken auf die obere Trägerfolie 2 hergestellt.

Zwischen den langgestreckten Leiterbahnen 4 auf der unteren Trägerfolie 2 sind jeweilige erste Abstandselemente angeordnet, die bei der Ausführungsform nach Figur 1 durch obere Abstandselemente 5, die auf der durchgehenden Leiterbahn 3 angeordnet sind und sich in Richtung auf die untere Trägerfolie 2 erstrecken, und untere Abstandselemente 6 gebildet sind, die auf die untere Trägerfolie 2 aufgedruckt sind und mit den Abstandselementen 5 auf der Leiterbahn 3 im Wesentlichen ausgerichtet sind.

Diese ersten Abstandselemente 5, 6 können auch als einstückiges Abstandselement ausgebildet sein, das entweder auf der unteren Trägerfolie 2 oder auf der durchgehenden Leiterbahn 3 der oberen Trägerfolie 1 aufgedruckt ist.

Wie bereits aus dem Vorstehenden hervorgeht, sind sowohl die Leiterbahnen als auch die Abstandselemente vorzugsweise im Druckverfahren auf die jeweiligen Trägerfolien 1, 2 aufgedruckt.

Auf den langgestreckten Leiterbahnen 4 auf der unteren Trägerfolie 2 sind zusätzliche zweite Abstandselemente 7 angeordnet, die sich bei der Ausführungsform nach Figur 1 in Querrichtung zur Längsrichtung der Leiterbahnen erstrecken, jedoch auch in anderer Weise ausgebildet sein können, wie dies noch näher erläutert werden wird.

Gemäß einer bevorzugten Ausgestaltung der Erfindung sind bei der Ausführungsform nach Figur 1 die ersten Abstandselemente 5, 6 aus einem Material und/oder mit Abmessungen hergestellt, das bzw. die eine höhere Widerstandskraft gegen eine Zusammendrückung aufweisen, als die auf den Leiterbahnen 4 angeordneten zweiten Abstandselemente 7.

Im Ergebnis sind durch diese Ausgestaltung der ersten Abstandselemente 5, 6 die Leiterbahnen 3, 4 jeweils zwischen zwei ersten Abstandselementen 5, 6 aufgespannt, selbst wenn die Sensoreinheit als solche auf einer gekrümmten Oberfläche, beispielsweise eines Steuerelements oder dergleichen aufgebracht ist.

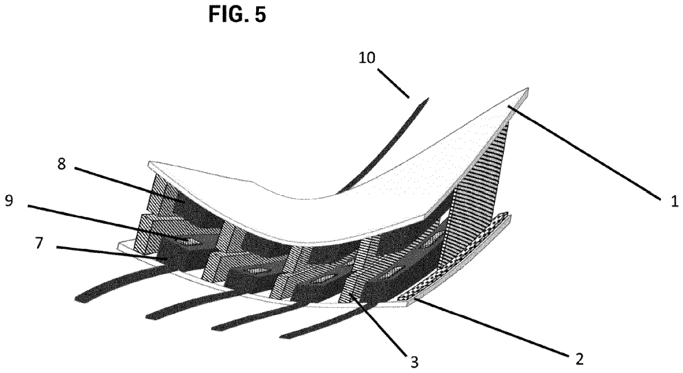

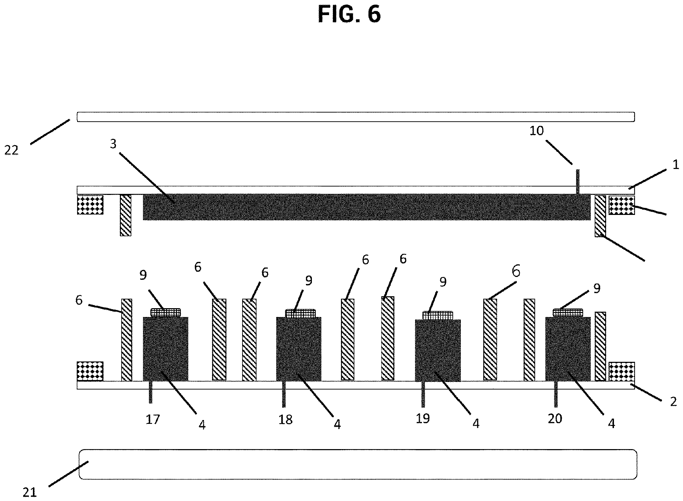

Der Grundgedanke der Ausführungsform nach Figur 1 besteht damit darin, dass, wenn eine aus einer Vielzahl von Segmenten der in Figur 1 dargestellten Art bestehende Sensoreinheit beispielsweise auf einen Lenkradkranz oder einen ähnlichen gerundeten Gegenstand aufgezogen wird, wie dies beispielsweise in den Figuren 5 und 6 schematisch dargestellt ist, die ersten Abstandselemente 5, 6 die Trägerfolien 1, 2 und die darauf angeordneten Leiterbahnen aufspannen, sodass die Verformung der Sensoreinheit beim Aufziehen auf einen Lenkradkranz oder dergleichen nicht dazu führt, dass die obere Leiterbahn 3 und die unteren Leiterbahnen 4 miteinander dauerhaft in Kontakt kommen.

Die Leiterbahnen 4 der unteren Trägerfolie 2 sind mit zweiten Abstandselementen 7 versehen, die ebenfalls dazu beitragen, dass selbst im verformten Zustand der Sensoreinheit auf einer gekrümmten Oberfläche keine unerwünschte Kontaktgabe zwischen beispielsweise der oberen Leiterbahn 3 nach Figur 1 und den langgestreckten Leiterbahnen 4 auftritt, ohne das eine gewollte äußere Betätigung erfolgt.

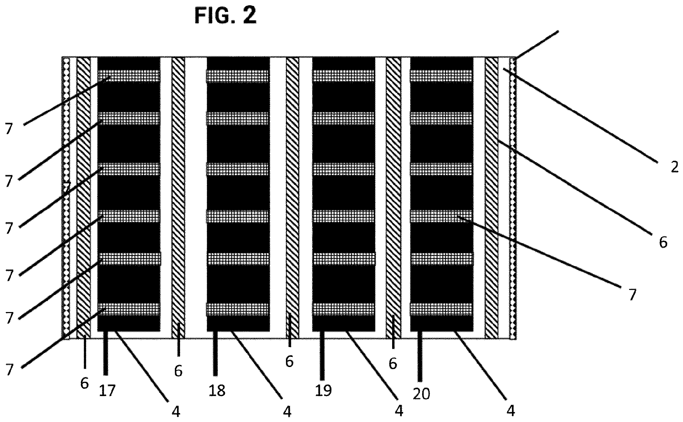

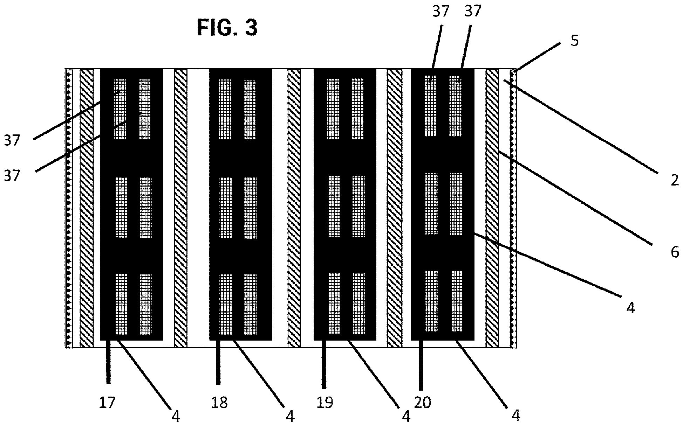

In Abhängigkeit von der zu erwartenden dauernden Krümmung der Sensoreinheit nach dem Aufbringen auf einen Gegenstand können die zweiten Abstandselemente 7, die gemäß den Figuren 1 und 2 in Querrichtung zu den Leiterbahnen 4 mit seitlichem Abstand angeordnet sind, wie dies anhand der Figur 2 gezeigt ist, auch in Längsrichtung der Leiterbahnen 4 mit Abstand voneinander angeordnet sein, wie dies in Figur 3 durch die zweiten Abstandselemente 37 gezeigt ist.

In den Figuren 1 bis 3 sind lediglich die auf der unteren Trägerfolie 2 angeordneten Leiterbahnen 4 streifenförmig ausgebildet, während die Leiterbahn 3 auf der oberen Trägerfolie 1 durchgehend ist.

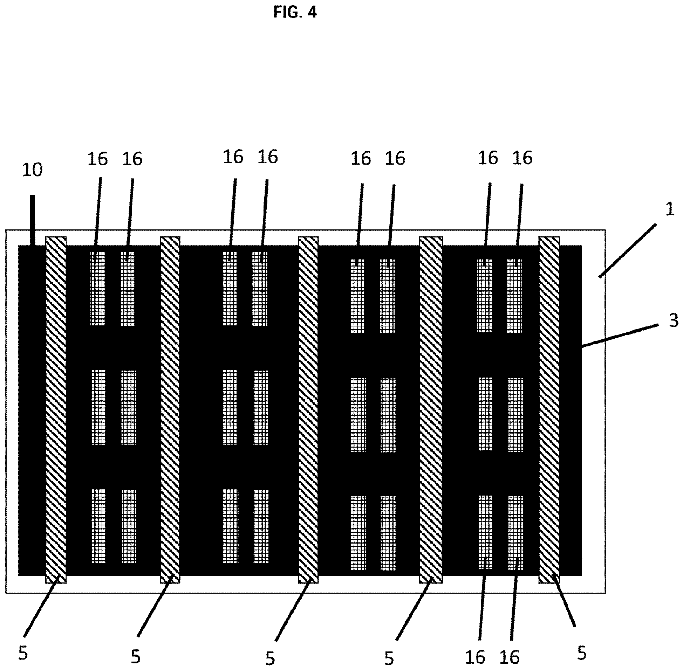

Es ist jedoch auch möglich, auch die durchgehende Leiterbahn 3 der ersten Trägerfolie 1 neben den ersten Abstandselementen 5 mit zweiten Abstandselementen 16 zu bedrucken, wie dies in Figur 4 dargestellt ist. In diesem Fall sind auch die zweiten Abstandselemente 7 auf der Leiterbahn 3 mit den zweiten Abstandselementen 7 auf den Leiterbahnen 4 ausgerichtet und/oder die zweiten Abstandselemente 7 auf den Leiterbahnen 4 können fortgelassen werden.

Wie dies in Figur 4 gezeigt ist, sind auf der oberen Leiterbahn 3 nicht nur eine relativ hohe Widerstandskraft gegen eine Zusammendrückung aufweisende erste Abstandselemente 5 angeordnet, sondern zusätzlich in den zwischenliegenden Bereichen der Leiterbahn 3 zweite Abstandselemente 16 angeordnet, die zusätzlich eine sich konstruktiv ergebende unerwünschte Kontaktgabe zwischen den oberen und unteren Leiterbahnen 3, 4 verhindern. Die ersten Abstandselemente 5 können hierbei auch durchgehend angeordnet sein, das heißt dass sie sich direkt auf der unteren Trägerfolie 2 abstützen.

In Figur 5 ist eine weitere Ausführungsform eines Segments der Sensoreinheiten dargestellt, bei denen dargestellt ist, wie die Trägerfolien und die Abstandselemente bei einer Anordnung auf einer dreidimensionalen Grundlage verformt sind. Bei dieser Verformung kommen zunächst die ersten Abstandselemente 5, 6 miteinander in Kontakt beziehungsweise werden verformt, wobei diese Verformung jedoch nicht ausreicht, um eine Kontaktgabe zwischen den Leiterbahnen 3 der oberen Trägerfolie 1 und den Leiterbahnen 4 der unteren Trägerfolie 2 zu bewirken. Auf den Leiterbahnen 4 der unteren Trägerfolie sind wiederum Abstandselemente mit geringerer Widerstandskraft gegen eine Zusammendrückung angeordnet, so dass in jedem Fall sichergestellt ist, dass eine Kontaktgabe zwischen den Leiterbahnen 3, 4 nur bei einer gewollten Betätigung, das heißt Druckausübung, auf eine der Trägerfolien bewirkt wird.

Es ist aus Figur 5 zu erkennen, dass die Leiterbahnen 3, 4 zwischen den ersten 5 Abstandselementen 5, 6 sozusagen aufgespannt sind, sodass eine unerwünschte Kontaktgabe, die sich auf dem Aufspannen des Segments auf eine dreidimensional gekrümmte Unterlage ergibt, soweit wie möglich, wenn nicht vollständig, verhindert wird.

Eine andere Ausführungsform zur Vergrößerung der Widerstandskraft der ersten Abstandselemente gegen eine Zusammendrückung ist in Figur 6 schematisch dargestellt. Hierbei sind ähnlich wie bei der Ausführungsform nach Figur 1 zwischen den einzelnen Leiterbahnen 4 jeweils paarweise erste Abstandselemente 6 angeordnet. Durch die Verwendung von zwei paarweise angeordneten Abstandelementen zwischen den zwei Leiterbahnen 4 wird die Widerstandskraft dieser beiden Abstandelemente ebenfalls verstärkt, und auf den Leiterbahnen 4 selbst sind wiederum zweite Abstandelemente 9 angeordnet, die die Leiterbahn 4 in einzelne Betätigungsbereiche unterteilen.

Die Oberseite der Sensoreinheit kann durch eine Abdeckung 22 gebildet sein, die beispielsweise im Fall eines Lenkradkranzes eine äußere Lederumhüllung oder im Fall eines Fahrzeugsitzes ein Lederüberzug sein kann, die unter Ausübung einer erheblichen Zugkraft um den Lenkradkranz oder Sitz herum aufgezogen und vernäht werden.

Unter der Abdeckung 22 kann sich eine nicht dargestellte Polster- oder Isolierschicht befinden, die zum Ausgleich von Unebenheiten des Unterbaus dient.

Unter der Abdeckung 22 oder der Polsterschicht ist die erste Trägerfolie 1 der Sensoreinheit angeordnet. Diese erste Folie 1 weist auf ihrer Unterseite gemäß den Figuren 1 und 2 ein erstes Leiterbahnmuster 3 auf, das gemäß den Figuren 1 bis 4 als vollflächige Beschichtung aus einem einen Flächenwiderstand aufweisenden Material sein kann, jedoch auch eine Struktur aufweisen kann, wie sie hinsichtlich der Leiterbahnen der zweiten Trägerfolie 2 beschrieben wurde.

Auf der in den Figuren 1 und 2 oberen Oberfläche der ersten Trägerfolie 1 und/oder der Unterseite der unteren Trägerfolie 2 kann noch eine nicht dargestellte Heizleiterschicht angeordnet sein, deren Temperatur konstant gehalten werden kann.

Die Trägerfolien 1, 2 als solche können aus Elastomer-Material hergestellt und sehr flexibel und dünn sein, beispielsweise im Bereich von 80 bis 160 µm, sollten aber eine ausreichend geringe Dehnbarkeit aufweisen, um ein Reißen der Beschichtungen zu vermeiden, die die Leiterbahnmuster bilden. Diese einen Flächenwiderstand aufweisenden Beschichtungen können in Form einer Widerstands-Paste auf die Folien mit einer Dicke von etwa 40 bis 60 µm aufgedruckt sein.

Auch die ersten und zweiten Abstandselemente können auf die Folien nach dem Aufdrucken der Leiterbahnmuster auf eine oder beide der Trägerfolien aufgedruckt werden. Die Höhe der Abstandselemente kann in Abhängigkeit von der beabsichtigten Verwendung der Sensoreinheiten ausgewählt werden.

Damit ergeben sich sehr flexible Sensoreinheiten, die auch um gebogene Tragstrukturen aufgezogen oder in Bekleidungsstücke oder Schutzhelme eingenäht werden können.

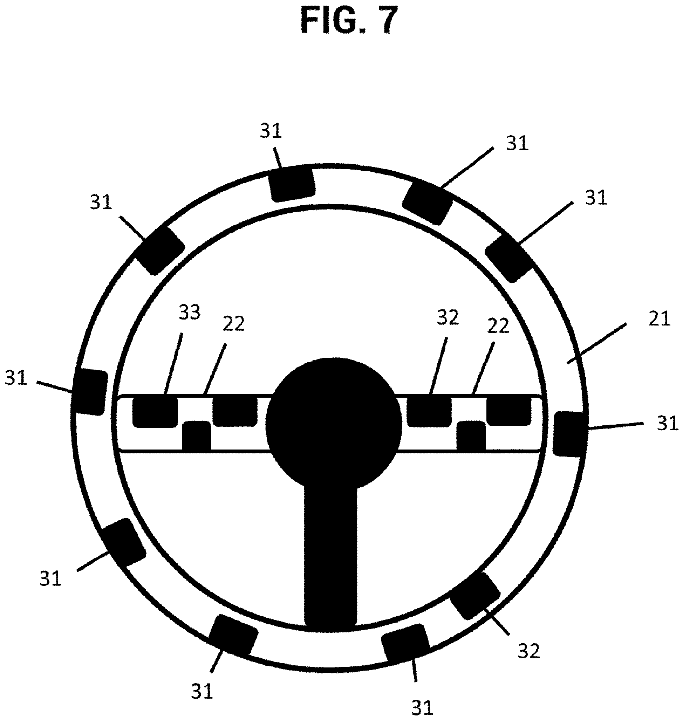

In Figur 7 ist ein Beispiel der Anwendung derartiger aus ersten und zweiten Trägerfolien bestehender Sensorsegmente 31, 32, 33 zur Auswertung der Tatsache dargestellt, dass eine Handkraft auf den Lenkradkranz 101 eines Lenkrades ausgeübt wird oder nicht. Hierzu werden eine oder mehrere Sensoreinheiten 31 um den Lenkradkranz 21 herum aufgezogen und in der anhand der Figur 6 beschriebenen Weise unter Einfügung weiterer Schichten unter einer Lederabdeckung angeordnet.

Die Anschlüsse 17, 18, 19, 20 der einzelnen Segmente 31, 32, 33 werden mit den Eingängen einer nicht gezeigten Auswerteschaltung verbunden, die einen Mikrokontroller und Multiplexer zur zeitlich aufeinander folgenden Abtastung der Ausgangssignale der einzelnen Sensoreinheiten einschließen kann.

Der Mikrokontroller verfügt entweder über getrennte Speichereinheiten oder ist mit diesen verbunden. Der Mikrokontroller ist getaktet und wertet im vorgegebenen Zeitabständen die an den Anschlüssen 10, 17, 18, 19, 20 erscheinenden Widerstandswerte aus und speichert diese in ein oder mehreren Speichern ab, wobei der jeweils aktuelle Messwert des Widerstands in einem Vergleicher mit den vorhergehenden, in den Speichern gespeicherten Messwerten verglichen wird. Bel einer Änderung des aktuellen Widerstandswerts um einen vorgegebenen Betrag gegenüber den gespeicherten Widerstandswerten gibt der Vergleicher jeweilige Ausgangssignale zu Signalisierungs- oder Steuerzwecke ab.

## Patentansprüche

1. Flächenhafte Sensoreinheit für -Kraft- und/oder Drucksensorsysteme, mit ersten und zweiten isolierenden Trägerfolien (1, 2), die übereinander angeordnet sind und auf ihren einander zugewandten Flächen erste und zweite Leiterbahnmuster (3, 4) tragen, zwischen denen elastisch verformbare Abstandselemente (5, 6, 7) angeordnet sind, die zur elastischen Vorspannung der Trägerfolien (1, 2) ausgebildet sind und durch Ausüben einer im Wesentlichen unter einem rechten Winkel zur Ebene der Trägerfolien (1, 2) gerichteten Kraft auf zumindest eine der Trägerfolien (1, 2) ein Kontakt zwischen den ersten und zweiten Leiterbahnmustern (3, 4) herstellbar ist, wobei zumindest eines der ersten und zweiten Leiterbahnmuster (3, 4) durch die ersten Abstandselemente (5) in eine Vielzahl von Kontaktbereichen unterteilt ist, in denen bei einer Kraftausübung auf zumindest eine der Folien ein Kontakt zwischen den Leiterbahnmustern (3, 4) der ersten und zweiten Trägerfolien (1, 2) herstellbar ist, wobei die Leiterbahnmuster (3, 4) zumindest teilweise durch widerstandsbehaftete Beschichtungen gebildet sind, die einen vorgegebenen elektrischen Flächenwiderstand aufweisen, und wobei die ersten und zweiten Leiterbahnmuster (3, 4) Anschlüsse (10, 17, 18, 19, 20) zur Verbindung mit einer Auswerteschaltung aufweisen, die ein Ausgangssignal in Abhängigkeit von der Position und/oder der Anzahl durch Kraftausübung und Zusammendrückung der ersten Abstandselemente hergestellten Widerstandswerte abgibt, **dadurch gekennzeichnet, dass** auf zumindest einer der einander zugewandten Leiterbahnen eine Anzahl von zweiten Abstandselementen (7) angeordnet sind, die eine geringere mechanische Widerstandskraft gegen eine Zusammendrückung als die ersten Abstandselemente (5, 6) aufweisen und mit Abstand voneinander angeordnet sind.

2. Sensoreinheit nach Anspruch 1, **dadurch gekennzeichnet, dass** das auf der Unterseite der ersten Trägerfolie (1) angeordnete Leiterbahnmuster (3) durch eine vollflächige widerstandsbehaftete Leiterbahn (3) gebildet ist, dass das auf der zweiten Trägerfolie (2) zugeordnete Leiterbahnmuster durch streifenförmige Leiterbahnen gebildet ist, die mit seitlichem Abstand voneinander auf der zweiten Trägerfolie (2) angeordnet sind, dass die ersten Abstandselemente (5, 6) zwischen den einzelnen streifenförmigen Leiterbahnen (4) auf der zweiten Trägerfolie angeordnet sind und sich in Richtung auf die durchgehende Leiterbahn (3) der ersten Trägerfolie (1) erstrecken, und dass die Höhe der ersten Abstandselemente (5, 6) größer als die Höhe der einzelnen streifenförmigen Leiterbahnen (4) plus der Höhe der darauf angeordneten zweiten Abstandselemente (7) ist.

3. Sensoreinheit nach Anspruch 2, **dadurch gekennzeichnet, dass** die ersten Abstandselemente durch auf der durchgehenden Leiterbahn (3) aufgedruckte erste Abstandselemente (5) und zweite auf den Zwischenraum zwischen den einzelnen Leiterbahnen (4) auf der zweiten Trägerfolie (2) aufgedruckte Abstandselemente (6) gebildet sind, die mit den auf der durchgehenden Leiterbahn (3) ausgebildeten Abstandselementen (5) ausgerichtet sind.

4. Sensoreinheit nach einem der Ansprüche 1 bis 3, **dadurch gekennzeichnet, dass** sich die zweiten Abstandselemente (7) in Querrichtung der Längserstreckung der Leiterbahnen (4) auf der zweiten Trägerfolie (2) erstrecken und mit Abstand voneinander angeordnet sind.

5. Sensoreinheit nach einem der Ansprüche 1 bis 3, **dadurch gekennzeichnet, dass** sich die zweiten Abstandselemente (37) in Längsrichtung der Leiterbahnen (4) auf der zweiten Trägerfolie (4) erstrecken und mit Abstand voneinander auf diesen Leiterbahnen (4) angeordnet sind.

6. Sensoreinheit nach einem der vorhergehenden Ansprüche, **dadurch gekennzeichnet, dass** die mechanische Widerstandskraft der ersten Abstandselemente (6, 16) gegen eine Zusammendrückung durch eine paarweise Anordnung dieser ersten Abstandselemente (6, 16) zwischen den einzelnen Leiterbahnen (4) vergrößert ist.

7. Sensorsystem mit einer oder mehreren Sensoreinheiten nach einem oder mehreren der vorhergehenden Ansprüche, **dadurch gekennzeichnet, dass** die Sensoreinheiten unter einer Lederabdeckung eines Lenkrades angeordnet sind.

8. Sensorsystem mit einer oder mehreren Sensoreinheiten nach einem oder mehreren der Ansprüche 1 bis 6, **dadurch gekennzeichnet, dass** die Sensoreinheiten in Bekleidungsstücke eingenäht sind.

9. Sensorsystem mit einer oder mehreren Sensoreinheiten nach einem oder mehreren der Ansprüche 1 bis 6, **dadurch gekennzeichnet, dass** eine oder mehrere Sensoreinheiten in der Grundfläche eines Regalsystems angeordnet und zur Ermittlung des Füllzustandes des Regalsystems ausgebildet sind.

## Claims

1. Planar sensor unit for force and/or pressure sensor systems, having first and second isolating carrier films (1, 2) arranged one above the other and carrying first and second conductor path patterns (3, 4) on their surfaces facing each other, between which elastically deformable distance elements (5, 6, 7) are arranged, which are designed for elastically biassing the carrier films (1,2), and by exerting a force essentially directed under a right angle to the plane of the carrier films (1, 2) onto at least one of the carrier films (1, 2), a contact between the first and second conductor path patterns (3, 4) can be established, wherein at least one of the first and second conductor path patterns (3, 4) is subdivided by the first distance elements (5) into a plurality of contact areas, in which, when force is exerted onto at least one of the films, a contact between the conductor path patterns (3, 4) of the first and second carrier films (1, 2) can be established, wherein the conductor path patterns (3, 4) are at least in part formed by resistive coatings having a predetermined electrical surface resistance, and wherein the first and second conductor path patterns (3, 4) include connections (10, 17, 18, 19, 20) for connecting to an evaluation circuit, outputting an output signal depending on the position and/or number of the first resistance values established by exerting force onto and compressing the first distance elements,
**characterized in that** at least on one of the conductor paths facing each other, a number of second distance elements (7) is arranged which have a lower mechanical resistance force against compression than the first distance elements (5, 6), and are arranged at a distance from one another.

2. Sensor unit according to claim 1, **characterized in that** the conductor path pattern (3) arranged on the underside of the first carrier film (1) is formed by a full-surface resistive conductor path (3), that the conductor path pattern associated to the second carrier film (2) is formed by strip-shaped conductor paths arranged on the second carrier film (2) having a lateral distance to one another, that the first distance elements (5, 6) are arranged between the individual strip-shaped conductor paths (4) on the second carrier film and extend towards the continuous conductor path (3) of the first carrier film (1), and that the height of the first distance elements (5, 6) is greater than the height of the individual strip-shaped conductor paths (4) plus the height of the second distance elements (7) arranged thereon.

3. Sensor unit according to claim 2, **characterized in that** the first distance elements are formed by first distance elements (5) imprinted on the continuous conductor path (3) and second distance elements imprinted on the interspace between the individual conductor paths (4) on the second carrier film (2), which are aligned with the distance elements (5) formed on the continuous conductor path (3).

4. Sensor unit according to any one of claims 1 to 3, **characterized in that** the second distance elements (7) extend in the transverse direction of the longitudinal extension of the conductor paths (4) of the second carrier film (2) and are arranged at a distance from one another.

5. Sensor unit according to any one of claims 1 to 3, **characterized in that** the second distance elements (7) extend in the longitudinal direction of the conductor paths (4) on the second carrier film (2) and are arranged at a distance from one another on these conductor paths (4).

6. Sensor unit according to any one of the preceding claims, **characterized in that** the mechanical resistance force of the first distance elements (6, 16) against a compression is increased by pairwise arranging these first distance elements (6, 16) between the individual conductor paths (4).

7. Sensor system having one or more sensor units according to one or more of the preceding claims, **characterized in that** the sensor units are arranged under a leather cover of a steering wheel.

8. Sensor system having one or more sensor units according to one or more of the claims 1 to 6, **characterized in that** the sensor units are sewn onto items of clothing.

9. Sensor system having one or more sensor units according to one or more of the claims 1 to 6, **characterized in that** one or more sensor units are arranged in the base surface of a shelf system and are designed for determining the filling state of the shelf system.

## Revendications

1. Unité de capteur pour systèmes de capteur de force et/ou de pression en forme du surface, comprenant des première et deuxième feuilles de support (1, 2) isolantes qui sont disposées les unes au-dessus des autres et portent sur leurs surfaces se faisant face des premier et deuxième motifs de pistes conductrices (3, 4) entre lesquels sont disposés des éléments d'espacement (5, 6, 7) déformables élastiquement qui sont constitués pour la précontrainte élastique des feuilles de support (1, 2) et un contact pouvant être établi entre les premier et deuxième motifs de pistes conductrices (3, 4) par application d'une force orientée sensiblement à angle droit par rapport au plan des feuilles de support (1, 2), sachant qu'au moins un des premier et deuxième motifs de pistes conductrices (3, 4) est subdivisé par les premiers éléments d'espacement (5) en une pluralité de zones de contact dans lesquelles, en cas d'application d'une force sur au moins une des feuilles, un contact peut être établi entre les motifs de pistes conductrices (3, 4) des première et deuxième feuilles de support (1, 2), sachant que les motifs de pistes conductrices (3, 4) sont formés au moins partiellement par des revêtements résistifs qui présentent une résistance électrique superficielle prédéfinie, et sachant que les premier et deuxième motifs de pistes conductrices (3, 4) présentent des raccords (10, 17, 18, 19, 20) pour la connexion à un circuit d'évaluation qui émet un signal de sortie en fonction de la position et/ou du nombre de valeurs de résistance générées par application de force et compression des premiers éléments d'espacement, **caractérisée en ce que** sur au moins une des pistes conductrices se faisant face sont disposés un nombre de deuxièmes éléments d'espacement (7) qui présentent une force de résistance mécanique moindre contre une compression que les premiers éléments d'espacement (5, 6) et sont disposés à distance les uns des autres.

2. Unité de capteur selon la revendication 1, **caractérisée en ce que** le motif de pistes conductrices (3) disposé sur la face inférieure de la première feuille de support (1) est formée par une piste conductrice (3) résistive intégrale, **en ce que** le motif de pistes conductrices afférent sur la deuxième feuille de support (2) est formé par des pistes conductrices en forme de bandes qui sont disposées à distance latérale les unes des autres sur la deuxième feuille de support (2), **en ce que** les premiers éléments d'espacement (5, 6) sont disposés entre les différentes pistes conductrices (4) en forme de bandes sur la deuxième feuille de support et s'étendent vers la piste conductrice (3) traversante de la première feuille de support (1), et **en ce que** la hauteur des premiers éléments d'espacement (5, 6) est supérieure à la hauteur des différentes pistes conductrices (4) en forme de bandes majorée de la hauteur des deuxièmes éléments d'espacement (7) disposés sur celles-ci.

3. Unité de capteur selon la revendication 2, **caractérisée en ce que** les premiers éléments d'espacement sont formés par des premiers éléments d'espacement (5) imprimés sur la piste conductrice (3) traversante et des deuxièmes éléments d'espacement (6) imprimés sur l'espace intermédiaire entre les différentes pistes conductrices (4) sur la deuxième feuille de support (2), lesquels sont alignés avec les éléments d'espacement (5) constitués sur la piste conductrice (3) traversante.

4. Unité de capteur selon l'une des revendications 1 à 3, **caractérisée en ce que** les deuxièmes éléments d'espacement (7) sont disposés en direction transversale de l'extension longitudinale des pistes conductrices (4) sur la deuxième feuille de support (2) et sont disposés à distance les uns des autres.

5. Unité de capteur selon l'une des revendications 1 à 3, **caractérisée en ce que** les deuxièmes éléments d'espacement (7) s'étendent en direction longitudinale des pistes conductrices (4) sur la deuxième feuille de support (2) et sont disposés à distance les uns des autres sur ces pistes conductrices (4).

6. Unité de capteur selon l'une des revendications précédentes, **caractérisée en ce que** la force de résistance magnétique des premiers éléments d'espacement (6, 16) contre une compression est augmentée par une disposition en paires de ces premiers éléments d'espacement (6, 16) entre les différentes pistes conductrices (4).

7. Système de capteur comprenant une ou plusieurs unités de capteur selon l'une ou plusieurs des revendications précédentes, **caractérisé en ce que** les unités de capteur sont disposées sous un revêtement de cuir d'un volant.

8. Système de capteur comprenant une ou plusieurs unités de capteur selon l'une ou plusieurs des revendications 1 à 6, **caractérisé en ce que** les unités de capteur sont cousues dans des pièces de vêtement.

9. Système de capteur comprenant une ou plusieurs unités de capteur selon l'une ou plusieurs des revendications 1 à 6, **caractérisé en ce qu'**une ou plusieurs unités de capteur sont disposées dans la surface de base d'un système d'étagères et sont constituées pour déterminer l'état de remplissage du système d'étagères.
